# FASCICULE DE BREVET EUROPEEN

(11) **EP 0 382 633 B1**
(45) Date de publication et mention de la délivrance du brevet: **26.05.1993**
(21) Numéro de dépôt: 90400333.2
(22) Date de dépôt: 07.02.1990
(51) Int. Cl.: B60G 17/027

(54) **Dispositif hydraulique de correction de hauteur**
Hydraulische Niveauregelung
Hydraulic height-adjusting device

(30) Priorité: 09.02.1989 FR 8902141
(43) Date de publication de la demande: 16.08.1990
(73) Titulaire: AUTOMOBILES PEUGEOT, 75116 Paris (FR); AUTOMOBILES CITROEN, 92200 Neuilly-sur-Seine (FR)
(72) Inventeur: Richard, Denis, F-94600 Choisy Le Roi (FR)
(74) Mandataire: Boivin, Claude

(56) Documents cités:
- DE-B- 1 160 313
- DE-B- 1 241 717
- FR-A- 2 561 591
- PATENT ABSTRACTS OF JAPAN vol. 12, no. 160 (M-697)(3007) 14 mai 1988, & JP-A-62 279110 (NHK SPRING CO.,LTD) 04 décembre 1987,

## Description

L'invention concerne un dispositif hydraulique de correction de hauteur pour un essieu à suspension métallique et plus particulièrement pour un essieu suspendu par deux barres de torsion parallèles à une traverse sur laquelle sont articulés les bras supports de roues.

Un essieu de ce genre est décrit dans le brevet FR-A-2 393 690.

On sait qu'en général dans les dispositifs de correction de hauteur, en suspension hydraulique comme en suspension métallique, la hauteur de l'essieu selon la charge est détectée par le pivotement de la section médiane de la barre anti-dévers; cette section médiane pivote quand les deux roues de l'essieu se déplacent dans le même sens. D'autre part les correcteurs de hauteur sont en général temporisés de manière à ne pas intervenir pendant le débattement de la suspension, mais uniquement en fonction de la charge ou pour une variation de hauteur de longue durée.

Dans un essieu à deux barres de torsion parallèles à la traverse, la barre anti-dévers est avantageusement disposée à l'intérieur de la traverse; elle est donc inaccessible pour prélever le signal détecteur de hauteur.

Le brevet français FR-A-2 615 456 décrit un correcteur de hauteur électrique pour une telle suspension, l'information de hauteur étant prélevée au niveau'de l'articulation de l'un des bras. Une telle solution présente deux inconvénients :
- Un risque de correction de hauteur indésirable en cas de roulis prolongé, sur certains virages d'autoroutes, du fait que le signal de détection de hauteur ne concerne qu'une seule roue.
- Le correcteur de hauteur situé au voisinage de l'articulation d'un bras est soumis à des projections destructives.

L'invention remédie aux inconvénients mentionnés ci-dessus; elle concerne un dispositif hydraulique de correction de hauteur du genre de celui qui est décrit dans le brevet FR-A-2 621 535 adapté à une suspension à deux barres de torsion parallèles à la traverse, avec un correcteur de hauteur hydraulique à tiroir disposé au voisinage du centre de l'essieu.

Le dispositif de correction hydraulique selon l'invention est caractérisé en ce qu'il comprend un étrier monté pivotant sur les deux barres de suspension et relié au tiroir du correcteur de hauteur par l'intermédiaire d'une biellette articulée et de moyens élastiques précontraints.

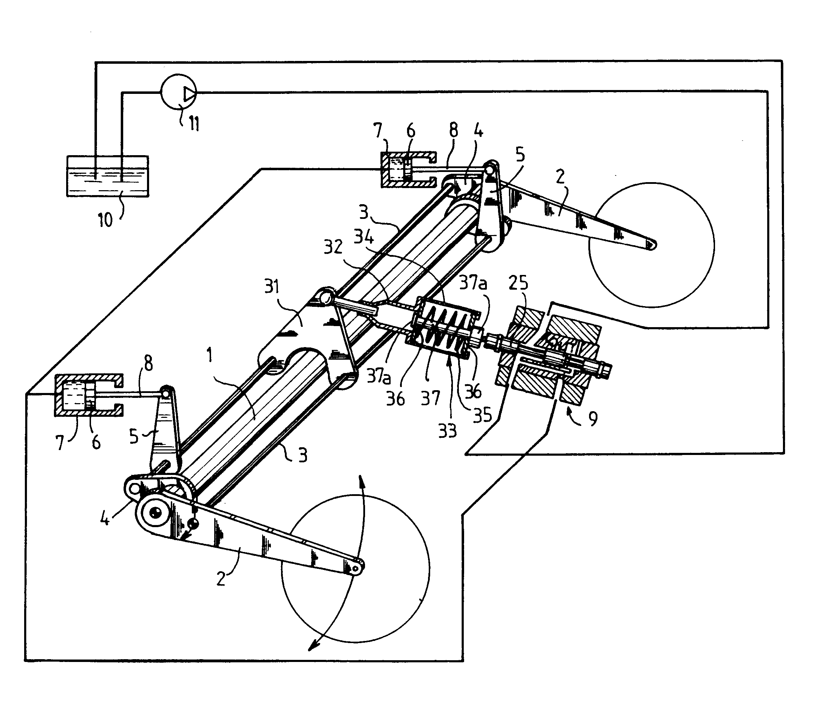

On a décrit ci-après, à titre d'exemple non limitatif, un mode de réalisation du dispositif de correction de hauteur selon l'invention, avec référence au dessin annexé dans lequel la Figure Unique est une vue en perspective schématique montrant un essieu comportant le dispositif.

Au dessin, on voit un essieu constitué par une traverse 1 sur chacune des extrémités de laquelle est monté pivotant un bras support de roue 2. Dans chacun de ces bras est encastrée l'une des extrémités d'une barre de torsion 3 dont l'autre extrémité est montée pivotante dans un boîtier de roue 4 solidaire de la traverse et porte un levier 5 disposé à proximité du boîtier et solidaire de la barre; l'une des barres 3 est disposée du même côté que la roue par rapport à l'axe de la traverse alors que l'autre barre est disposée du côté opposé. Le levier 5 est en appui sur le piston 6 d'un vérin 7 par l'intermédiaire d'une biellette 8, sous l'action du couple de torsion de la barre. Les deux vérins 7 peuvent être reliés par un correcteur de hauteur 9 à un réservoir de liquide hydraulique 10 ou à une pompe 11. On voit que lorsque l'un des bras 2 pivote, sa barre de torsion 3 fléchit.

Il est prévu un étrier 31 qui est disposé sensiblement dans le plan médian de la traverse 1; cet étrier forme palier pour les barres 3 qui le traversent et peuvent y pivoter librement. Cet étrier est relié au tiroir 25 du correcteur de hauteur 9 par l'intermédiaire d'une biellette articulée 32 qui est équipée d'un élément élastique précontraint 33. Cet élément 33 comporte un boîtier 34 qui est solidaire de la biellette 32 et contient un ressort hélicoïdal 35; ce ressort est précontraint entre deux rondelles 36 qui sont en butée sur le boîtier 34 et sur des épaulements 37a d'une tige 37 articulée par rapport au tiroir 25 du correcteur de hauteur 9. La précontrainte du ressort 35 augmente ainsi lorsque l'étrier 31 pivote, quel que soit le sens de pivotement.

En pompage, c'est-à-dire quand les deux roues du véhicule se déplacent dans le même sens, les deux barres de torsion 3 ont des mouvements de flexion en sens contraire; l'une monte et l'autre descend de sorte que l'étrier 31 pivote pratiquement autour de la traverse en entraînant ainsi le tiroir 25 par l'intermédiaire de la biellette 32.

En roulis, dans un virage, la roue extérieure monte alors que la roue intérieure descend de la même course. Les mouvements de flexion des deux barres de torsion 3 sont dirigés dans le même sens. L'étrier monte ou descend suivant le sens du virage; mais le mouvement est sans effet sur le tiroir 25 du correcteur de hauteur.

## Revendications

1. Dispositif de correction hydraulique de hauteur pour un essieu suspendu par deux barres de torsion (3) parallèles à une traverse (1) sur laquelle sont articulés les bras supports de roues (2), comportant un correcteur de hauteur hydraulique temporisé (9) à tiroir (25), des moyens de détection de la hauteur de l'essieu agissant sur le correcteur, et des moyens hydrauliques (6-7) agissant sur les ancrages des barres de suspension (3) selon la position du tiroir,
caractérisé en ce qu'il comprend un étrier (31) monté pivotant sur les deux barres de suspension et relié au tiroir (25) du correcteur de hauteur (9) par l'intermédiaire d'une biellette articulée (32) et de moyens élastiques précontraints (33).

2. Dispositif selon la revendication 1,
caractérisé en ce que les moyens élastiques précontraints comprennent un boîtier (34) qui est solidaire d'une biellette articulée (32) et un ressort hélicoïdal (35) précontraint entre deux rondelles (36) qui sont en butée sur le boîtier (34) et sur des épaulements (37a) d'une tige articulée (37) par rapport au tiroir (25) du correcteur (9).

## Patentansprüche

1. Vorrichtung zur hydraulischen Niveauregelung für eine Achse, die durch zwei Drehstäbe (3) aufgehängt ist, die parallel zu einem Querträger (1) verlaufen, an den die Rad-Halterungsarme (2) angelenkt sind, mit einem über einen Schieber (25) verzögerten hydraulischen Niveauregler (9), ferner mit auf den Regler einwirkenden Mitteln zur Feststellung des Achsniveaus sowie hydraulischen Mitteln (6-7), die auf die Verankerungen der Aufhängungsstangen (3) gemäß der Position des Schiebers einwirken, **dadurch gekennzeichnet,** daß sie einen Bügel (31) umfaßt, der schwenkbar auf den zwei Aufhängungsstangen befestigt und mit dem Schieber (25) des Niveaureglers (9) mittels einer angelenkten Pleuelstange (32) und elastischer vorgespannter Mittel (33) verbunden ist.

2. Vorrichtung nach Anspruch 1, dadurch gekennzeichnet, daß die elastischen vorgespannten Mittel ein Gehäuse (34), das mit der angelenkten Pleuelstange (32) fest verbunden ist, und eine Schraubenfeder (35) umfassen, die zwischen zwei Scheiben (36) vorgespannt ist, die sich auf dem Gehäuse (34) und den Schultern (37a) einer am Schieber (25) des Reglers (9) angelenkten Stange (37) abstützen.

## Claims

1. Hydraulic height adjustment device for an axle suspended by two torsion bars (3) parallel to a crossmember (1) joined to the two wheel support arms and comprising a time-delayed hydraulic height adjustor (9) containing a valve (25), means for detecting the height of the axle acting on the adjustor, and hydraulic means (6-7) acting on the anchorages of suspension bars (3) according to the position of the valve,
wherein it includes a clamp (31) mounted pivoting on the two suspension bars and connected to the valve (25) of the height adjustor (9) by means of an articulated rocker bar (32) and prestressed elastic means (33).

2. Device according to claim 1,
wherein the prestressed elastic means include a casing (34) integral with an articulated rocker bar (32) and a helical spring prestressed between two washers (36) abutting on the casing (34) and shoulders (37a) of a rod (37) joined with respect to the valve (25) of the adjustor (9).
